# EUROPÄISCHE PATENTSCHRIFT

(11) **EP 4 405 576 B1**
(45) Veröffentlichungstag und Bekanntmachung des Hinweises auf die Patenterteilung: **05.11.2025**
(21) Anmeldenummer: 22782522.1
(22) Anmeldetag: 22.09.2022
(51) Int. Cl.: F01P 7/10, B60K 11/08, F04D 29/54, F01P 5/02, F01P 3/18, B60K 11/06, B60K 1/00, F04D 19/00, F04D 29/56

(54) **KÜHLER-LÜFTER-SYSTEM**
RADIATOR FAN SYSTEM
SYSTÈME DE VENTILATEUR DE RADIATEUR

(30) Priorität: 22.09.2021 AT 507472021
(43) Veröffentlichungstag der Anmeldung: 31.07.2024
(73) Patentinhaber: AVL List GmbH, 8020 Graz (AT)
(72) Erfinder: HÜTTER, Matthias, 8502 LANNACH (AT)
(74) Vertreter: Babeluk Patentanwälte GmbH
(86) Internationale Anmeldenummer: PCT/EP2022/076371
(87) Internationale Veröffentlichungsnummer: WO 2023/046831

(56) Entgegenhaltungen:
- DE-A1- 3 344 136
- DE-A1- 4 300 577
- DE-A1- 4 414 893
- US-A1- 2010 071 976

## Beschreibung

Die Erfindung betrifft ein Kühler-Lüfter-System zum Kühlen und/oder Heizen einer Antriebseinrichtung, insbesondere eines Brennstoffzellensystems, zur Anordnung in einem Fahrzeug, wobei das Kühler-Lüfter-System zumindest ein Gebläse mit zumindest einem, um eine Drehachse drehbaren, angetriebenen Rotor zur Bewegung eines Luftstroms in eine Hauptströmungsrichtung, mit zumindest einem, zu einer Rotorebene normal zur Drehachse angestellten Rotorblatt aufweist, und wobei das Gebläse stromaufwärts und/oder stromabwärts des Rotors entlang der Hauptströmungsrichtung zumindest eine Kühlerabschottung zum Verschließen des Kühler-Lüfter-Systems aufweist, welche radial um eine Mittelachse angeordnete Schottblätter aufweist, die um eine Schwenkachse normal zur Mittelachse verschwenkbar sind, wobei die Schottblätter in einer geöffneten Stellung in Bezug zu einer Schottebene normal zur Mittelachse angestellt sind und dass sie gegenüber den Rotorblättern entgegengesetzt angestellt sind.

Sie betrifft auch ein Verfahren zur Temperierung einer Antriebseinrichtung, vorzugsweise eines Brennstoffzellensystems der Antriebseinrichtung, vorzugsweise in einem Fahrzeug, wobei ein Luftstrom in einem Kühler-Lüfter-System geführt wird und die Antriebseinrichtung durch den Luftstrom temperiert wird, wobei der Luftstrom von zumindest einem Rotor des Gebläses entlang einer Hauptströmungsrichtung bewegt wird, indem zumindest ein Rotorblatt des Rotors, welches in einer Rotorebene quer zu einer Drehachse des Rotors angestellt ist, Luft in die Hauptströmungsrichtung drückt, wobei in einem ersten Betriebszustand der Rotor angetrieben wird und Schottblätter einer Kühlerabschottung, welche radial um eine Mittelachse angeordnet sind, in Bezug zu der Schottebene normal zur Mittelachse angestellt werden, und in einem zweiten Betriebszustand der Rotor nicht angetrieben wird und die Schottblätter einen Führungskanal des Kühler-Lüfter-Systems, in dem der Luftstrom geführt wird, verschließen, wobei in dem ersten Betriebszustand der Luftstrom durch die Schottblätter, die gegenüber den Rotorblättern entgegengesetzt angestellt sind, abgelenkt wird.

Solche Kühler-Lüfter-Systeme stellen einen Luftstrom zur Temperierung, meist Kühlung für einen zu temperierenden Gegenstand oder Gerät, bereit.

Kühler-Lüfter-Systeme dieser Art weisen meist einen an der Front des Fahrzeugs angeordneten Einlass auf, über die Luft in das Kühler-Lüfter-System einströmt. Das Gebläse dient zur Einstellung der Geschwindigkeit und des Drucks des Luftstroms. Der Luftstrom wird nach erfolgter Einstellung zu dem zu kühlenden oder erwärmenden Element, beispielsweise einen Wärmetauscher einer Brennstoffzelle eines Brennstoffzellensystems, geführt, das in Wärmeaustausch mit dem Luftstrom steht und so Temperierflüssigkeit der Brennstoffzelle, meist Kühlflüssigkeit, entsprechend temperiert wird. Alternativ kann auch ein weiteres Kühlsystem wie eine Flüssigkeitskühlung vorgesehen sein, welche einen Wärmetauscher aufweist, der mit dem Luftstrom zum Wärmetausch in Strömungsverbindung steht. Dazu kann zumindest ein Teil des Wärmetauschers im Kühler-Lüfter-System angeordnet sein.

Der durch den Rotor angetriebene Luftstrom weist dabei stromabwärts des Rotors rotierende Strömungen auf, die nicht oder unwesentlich zur Temperierung beitragen. Leitwerke, welche meist als Leiträder ausgeführt sind, dienen dazu, diese ansonsten an Rotationsströmungen oder Drallströmungen verlorene Energie zu nutzen und die Strömungen in Richtung der Hauptströmungsrichtung zu linearisieren. Dies verringert den Gegendruck auf den Rotor und den Wirkungsgrad der Lüftung.

In der DE 10 2011 121 624 A1 wird ein Gebläse offenbart, das durch ein Leitwerk einen höheren Wirkungsgrad und damit eine erhöhte Kühlleistung erzielen kann.

Auch die US 2012/308 373 A1 offenbart ein ähnliches Gebläse, wobei der Rotor zwischen zwei Leitwerken angeordnet ist. Durch die entgegengesetzte Anstellung der Leitblätter des Leitwerkes gegenüber den Rotorblättern wird erreicht, dass die Drallströmungen vermieden oder gar vermindert werden. In beiden Fällen wird die Intensität der Kühlung oder Beheizung über den Antrieb des Rotors reguliert, um den wechselnden Anforderungen der Antriebseinrichtung, abhängig von äußeren Bedingungen wie der Umgebungstemperatur und den Betriebszuständen der Antriebseinrichtung, möglichst gut zu entsprechen. Dies ist aber oft eine nur unzureichende Regelung. Wenn zum Beispiel aufgrund der äußeren Umstände und des Zustandes der Antriebseinrichtung kein Bedarf an einer Temperierung besteht, kommt es trotz abgeschaltetem Rotor zu einem Luftstrom, bedingt durch den frontseitigen Einlass, über den Luft eindringt. Dies stört die Aerodynamik des Fahrzeugs.

Wenn das Kühler-Lüfter-System während des Betriebs des Fahrzeugs gerade nicht benötigt wird, so ist ein passiver Luftstrom durch das System bei ausgeschaltetem Rotor unvorteilhaft, da so der Luftwiderstand des Fahrzeugs erhöht wird. Daher sind Kühlerabschottungen bekannt, welche den Kanal, in dem der Luftstrom geführt wird, geschlossen werden kann und so der Luftstrom unterbrochen werden kann.

In der US 2010/0071976 A1 wird eine solche Kühlabschottung offenbart, welche radial angeordnete Schottblätter aufweist. Wenn ein Luftstrom wünschenswert ist, drehen sich die Schottblätter, sodass deren Profil im Wesentlichen parallel zur Hauptströmungsrichtung stehen und die Luft hindurchströmen kann. In anderen Stellungen werden sie nicht festgelegt, wodurch sie sich abhängig von der Luftströmung in geringem Maße verschwenken können. Dies löst das Problem des erhöhten Luftwiderstandes bei ausgeschaltetem Rotor. Zur Verhinderung der Drallströmungen muss aber ein Leitwerk vorgesehen werden, da die Schottblätter nicht dazu geeignet sind, eine Verwirbelung zu verhindern.

In der DE 33 44 136 A1 wird eine Ausführungsform beschrieben, die entgegengesetzt angestellte Schottblätter aufweist. Dies ermöglicht die Verminderung von Drallströmungen und ermöglicht eine lineare Anströmung einer Antriebseinrichtung. Dies erhöht die Effizienz der Temperierung. Jedoch wird durch die lineare Anströmung der voluminösen Antriebseinrichtung ein hoher Strömungswiderstand erzeugt, der die Effizienz senkt.

Aufgabe der Erfindung ist damit, ein Kühler-Lüfter-System und ein Verfahren zur Temperierung einer Antriebseinrichtung bereitzustellen, das eine verbesserten Wirkungsgrad aufweist und möglichst einfach und robust aufgebaut ist.

Diese Aufgabe wird erfindungsgemäß dadurch gelöst, dass zumindest ein Teil der Luft des Luftstromes durch die Kühlerabschottung von der Mittelachse radial wegleitbar ist.

Sie wird auch dadurch gelöst, dass die Kühlerabschottung, den Luftstrom von der Mittelachse wegleiten.

Durch die entgegengesetzte Anstellung der Schottblätter zum Rotorblatt können die Schottblätter zusätzlich zu ihrer Funktion als Verschlusselemente auch zur Unterbindung von Drallströmungen verwendet werden. Dies ist besonders vorteilhaft, da so kein zusätzliches Leitwerk mehr notwendig ist und ein besonders einfacher Aufbau ermöglicht wird.

Durch die Verschwenkbarkeit der Stellung des Schottblattes im Luftstrom kann die Wirkung des Schottblattes auf den Luftstrom verändert und an die momentanen Bedingungen und Ansprüche angepasst werden. Damit kann der Luftdruck des Luftstroms stromabwärts des Rotors genauer eingestellt werden und abhängig von Fahrgeschwindigkeit des Fahrzeugs und Drehgeschwindigkeit des Rotors die optimale Einstellung des Luftstroms durchgeführt werden. Zusätzlich kann so der Wirkungsgrad bei verschiedenen Drehgeschwindigkeiten des Rotors optimiert werden und die Rotationsenergie optimal in potentielle Energie umgewandelt werden.

Mit Anstellung oder Pitch gegenüber einer Ebene ist dabei gemeint, dass das Blatt gegenüber der Ebene derart verdreht ist, dass eine Strömungsfläche des Blattes, das die Luft umlenkt, zur Ebene und um eine Achse im Wesentlichen normal zur Drehachse oder Mittelachse, geneigt ist, also nicht parallel zur Ebene ist.

Mit entgegengesetzter Anstellung ist dabei gemeint, dass das Rotorblatt und die Schottblätter in unterschiedliche Richtungen angestellt sind, also in unterschiedliche Richtungen verschwenkt sind.

Erfindungsgemäß ist vorgesehen, dass das Schottblatt um eine Schwenkachse verschwenkbar ist, welche im Wesentlichen normal zur Hauptströmungsrichtung steht. In der Regel erstreckt sich die Schwenkachse im Wesentlichen entlang der längeren Erstreckung des länglichen Schottblatts. Durch eine derartige Verschwenkung kann durch eine kleine Bewegung die Wirkung auf den Luftstrom stark verändert werden. Darüber hinaus kann so effektiv eine Einstellung der relativen Positionen von Eintrittskante und Austrittskante des Schottblattes vorgenommen werden, was für dessen Wirkung maßgeblich ist. Es kann auch vorgesehen sein, dass das Schottblatt zusätzlich zur Verschwenkbarkeit um die Schwenkachse noch weitere Bewegungen ausführen kann, also beispielsweise um weitere Achsen verschwenkbar ist. Entsprechendes gilt auch wenn vorgesehen ist, dass die Ablenkung des Luftstromes die Verschwenkung des Schottblattes um eine Schwenkachse umfasst und dass die Schwenkachse im Wesentlichen normal zur Hauptströmungsrichtung steht.

Der Rotor weist in der Regel mehrere Rotorblätter auf, welche um die Drehachse, vorzugsweise gleichmäßig, im Wesentlichen radial angeordnet sind. In der Regel wird der Rotor durch einen Elektromotor angetrieben oder ist durch einen Elektromotor antreibbar.

Die Rotorebene ist eine Ebene, in der zumindest ein Rotorblatt liegt und entlang derer sich das Rotorblatt im Wesentlichen erstreckt. Dabei können mehrere Rotorblätter vorgesehen sein, welche in mehreren Rotorebenen liegen, welche vorzugsweise im Wesentlichen parallel zueinander stehen.

Leiträder sind anders als Rotoren nicht um die Drehachse des Rotors drehbar, sondern sind um diese Drehachse im Wesentlichen unbeweglich. Sie können zwar in kleinerem Rahmen beweglich, insbesondere schwenkbar sein, jedoch nicht mit hoher Geschwindigkeit wie Rotoren über längere Zeiträume drehen. Die Drehachse des Rotors entspricht im Bereich des Rotors in der Regel der Hauptströmungsrichtung.

Das Kühler-Lüfter-System kann dabei einerseits passiv heizen und/oder kühlen, also bloß über den die Bewegung und Austausch der Luft temperieren, ohne die Temperatur der Luft wesentlich zu ändern. Es kann aber auch aktive Heiz- oder Kühlelemente wie einen Heizwiderstand oder eine Wärmepumpe aufweisen, die die Temperatur des Luftstromes aktiv ändern, bevor er zur Heizung und/oder Kühlung der Antriebseinrichtung verwendet wird.

Die Antriebseinrichtung kann eine Brennkraftmaschine und/oder einen Elektromotor umfassen. Vorzugsweise umfasst die Antriebseinrichtung zumindest ein Brennstoffzellensystem, welches durch das Gebläse temperiert wird. Das Brennstoffzellensystem kann zur Energiebereitstellung für einen Elektromotor der Antriebseinrichtung dienen.

Vorzugsweise ist das Schottblatt als Leitschaufel ausgeführt. Das Schottblatt weist meist eine längliche Form auf, wobei eine Leitfläche im Querschnitt vorzugsweise gebeugt ist.

Vorzugsweise ist vorgesehen, dass die Kühlerabschottung direkt oder unmittelbar stromaufwärts und/oder direkt oder unmittelbar stromabwärts des Rotors angeordnet ist. Damit ist gemeint, dass der Abstand zwischen der Kühlerabschottung und dem Rotor weniger als der Durchmesser des Rotors, vorzugsweise weniger als der halbe Durchmesser des Rotors beträgt. Besonders vorzugsweise ist die Kühlerabschottung weniger als 10 cm, ganz besonders vorzugsweise weniger als 5 cm stromaufwärts und/oder stromabwärts des Rotors angeordnet.

Vorteilhaft ist auch, wenn die Kühlerabschottung mehrere Schottblätter aufweist, welche im Wesentlichen radial um eine Mittelachse angeordnet sind, wobei die Mittelachse im Wesentlichen parallel zur Hauptströmungsrichtung steht. Damit kann die Kühlerabschottung im Wesentlichen als Leitrad ausgeführt werden und eine umfassende Wirkung auf den gesamten Luftstrom wird ermöglicht. In der Regel entspricht die Mittelachse im Wesentlichen der Drehachse des Rotors und/ oder ist zentral in der Kühlerabschottung und/oder zentral im Strömungsquerschnitt der Luftströmung im Kanal, in dem die Kühlerabschottung angeordnet ist, angeordnet. Vorzugsweise sind die Schottblätter im Wesentlichen rotationssymmetrisch um die Mittelachse angeordnet. Vorzugsweise sind die Schottblätter gleichmäßig um die Mittelachse angeordnet. Es kann vorgesehen sein, dass im Bereich der Mittelachse eine Nabe angeordnet ist, welche die Schottblätter miteinander verbindet.

Weiters kann vorgesehen sein, dass die Kühlerabschottung ein Einstellelement aufweist, welches mit zumindest einem Teil der einstellbaren Schottblätter, vorzugsweise mit allen Schottblättern, verbunden ist und die Stellung dieser Schottblätter gemeinsam einstellt. Damit kann eine möglichst gleichmäßige und einfache Einstellung erreicht werden. Entsprechendes gilt auch, wenn vorgesehen ist, dass mehrere radial um eine Mittelachse angeordnete Schottblätter über ein gemeinsames Einstellelement gemeinsam verschwenkt werden.

Besonders vorteilhaft ist, wenn das Einstellelement, vorzugsweise parallel zur Mittelachse stehende, Zähne aufweist und die mit ihm verbundenen Schottblätter Eingreifteile aufweist, wobei Zähne des Eingreifteils in die Zähne des Einstellelements eingreifen. Damit können durch Drehung des Einstellelements die Schottblätter um ihre Schwenkachsen gedreht werden, indem die Eingreifteile durch dessen Zähne entsprechend dem Einstellelement verdreht werden. Das Eingreifteil ist dabei vorzugsweise ein Zahnrad oder Zahnradteilsegment, dessen Drehachse die Schwenkachse ist.

Es kann auch vorgesehen sein, dass ein Stift an dem Einstellelement oder den Schottblättern angeordnet ist und eine Führungsöffnung an dem jeweils anderem Element, also Einstellelement oder den Schottblättern, angeordnet ist, dass der Stift in die Führungsöffnung hineinragt und dass der Stift zumindest teilweise außerhalb der Schwenkachse des Schottblattes liegt. Dadurch kann auf einfache und effiziente Weise eine Verbindung zwischen Schottblatt und Einstellelement hergestellt werden, die ein Verschwenken gut ermöglicht. Der Stift kann in der Führungsöffnung verschwenken und trotzdem die Kraft übertragen. Der Stift kann dabei vollständig von der Schwenkachse beabstandet sein, oder es kann auch ein Teil des Stiftes in der Schwenkachse liegen und ein anderer Teil aus dieser auskragen, also außerhalb der Schwenkachse liegen.

Erfindungsgemäß ist vorgesehen, dass zumindest ein Teil der Luft des Luftstromes, vorzugsweise zumindest der Großteil der Luft durch die Kühlerabschottung von der Mittelachse radial wegleitbar ist. Da Antriebseinrichtungen oder die zu temperierenden Teile der Antriebseinrichtungen in der Regel sehr voluminös sind, wird so das Umströmen erleichtert und der Strömungswiderstand gesenkt. Dies erhöht die Effizienz. Entsprechendes gilt auch wenn die Kühlerabschottung, vorzugsweise die Schottblätter, den Luftstrom von der Mittelachse wegleiten.

Zur besseren Temperierung kann vorgesehen sein, dass zumindest ein Heiz- und/oder Kühlelement stromaufwärts und/oder stromabwärts des Rotors im Luftstrom angeordnet ist. Das Heiz- und/oder Kühlelement ist zum Heizen und/oder Kühlen des Luftstromes eingerichtet. Damit ist ein aktives Element gemeint, also beispielsweise eine Wärmepumpe, ein Wärmetauscher oder ein Heizwiderstand. Dieser Wärmetauscher kann auch mit einem weiteren Kühlsystem der Antriebseinrichtung oder eines anderen Elements des Fahrzeugs verbunden sein. Dies gilt auch, wenn der Luftstrom stromaufwärts und/oder stromabwärts des Rotors gekühlt oder beheizt wird.

Vorzugsweise ist vorgesehen, dass die Schottblätter in einer geschlossenen Stellung die Verbindung zwischen dem Rotor und zumindest einem Zuführkanal zum Zuführen des Luftstromes zum Rotor und/oder die Verbindung zwischen dem Rotor und zumindest einem Abführkanal zum Abführen des Luftstromes vom Rotor im Wesentlichen verschließen. Es handelt sich dabei bei der geschlossenen Stellung um eine von mehreren möglichen Stellungen des Schottblattes. Damit kann verhindert werden, dass ein stärkerer Luftstrom entsteht, auch wenn der Rotor abgeschaltet ist und keine Temperierung notwendig ist. Dies verhindert das Eindringen von Luft in das Lüftungssystem über den Zuführkanal und stellt sicher, dass die Luft an der äußeren Kontur des Fahrzeugs vorbeigeführt wird. Der Zuführkanal und/oder der Abführkanal sind vorzugsweise im Führungskanal angeordnet oder mit diesem strömungsverbunden.

Um einen kompakten Aufbau des Gebläses zu ermöglichen kann vorgesehen sein, dass das Gebläse zumindest einen Führungskanal zur Führung des Luftstromes aufweist, dass in dem Führungskanal der Rotor und die Kühlerabschottung angeordnet sind und dass sich der Rotor und/oder die Kühlerabschottung im Wesentlichen über den gesamten Querschnitt des Führungskanals erstrecken.

Besonders vorteilhaft ist, wenn die Drehachse und die Mittelachse parallel zueinander stehen und vorzugsweise koaxial sind und die Kühlerabschottung vorzugsweise stromabwärts des Rotors angeordnet ist. Damit wird eine optimale Wirkung gegen die Drallströmungen durch die Kühlerabschottung erreicht.

Die Erfindung betrifft weiters ein Kraftfahrzeug, welches zumindest eine Antriebseinrichtung zur Fortbewegung des Kraftfahrzeugs, vorzugsweise eine zumindest ein Brennstoffzellensystem umfassende Antriebseinrichtung, aufweist, wobei das Kraftfahrzeug ein erfindungsgemäßes Kühler-Lüfter-System aufweist. Das Kühler-Lüfter-System kann zumindest mit einem Teil der Antriebseinrichtung strömungsverbunden sein, oder es kann zumindest ein Teil der Antriebseinrichtung im Luftstrom angeordnet sein. In der Regel wird der Luftstrom durch einen Belüftungskanal von einem Einlass zum Ansaugen von Umgebungsluft zu dem Gebläse und vom Gebläse zu der Antriebseinrichtung oder dem Teil der Antriebseinrichtung geführt und danach über einen Auslass wieder abgeführt. Die Antriebseinrichtung weist dabei üblicherweise einen Motor wie eine Brennkraftmaschine und/oder einen Elektromotor auf und kann darüber hinaus auch Energiebereitstellungseinheiten umfassen, beispielsweise Batterien, Tanks, beispielsweise für Treibstoff, Aufbereitungseinheiten für Treibstoff oder Brennstoffzellensysteme mit zumindest einer Brennstoffzelle.

Vorzugsweise wird das Kühler-Lüfter-System zumindest einen Einlass zur Aufnahme von Umgebungsluft aufweist, und dass der Einlass in Hauptfahrrichtung des Kraftfahrzeugs angeordnet ist. Mit in Hauptfahrrichtung ist dabei gemeint, dass die zumindest eine Öffnung des Einlasses in Richtung der Hauptfahrrichtung zeigt, also die Luft vor dem Fahrzeug bei Bewegung in die Hauptfahrrichtung über den Einlass in das Kühlersystem eindringt.

Dabei ist es besonders vorteilhaft, wenn zumindest ein Brennstoffzellensystem oder ein Verbrennungsmotor der Antriebseinrichtung stromabwärts des Gebläses zumindest teilweise im Luftstrom angeordnet ist. Vorzugsweise kann auch vorgesehen sein, dass der Luftstrom im Bereich des Brennstoffzellensystems oder des Verbrennungsmotors vorzugsweise um das Brennstoffzellensystem oder den Verbrennungsmotor herumgeführt ist. Dadurch kann eine effiziente Temperierung von jenen Bauteilen erreicht werden, welche im Betrieb zu einer hohen Wärmeproduktion neigen. Mit Führung um das Brennstoffzellensystem herum ist gemeint, dass der Luftstrom entlang des Mantels des Brennstoffzellensystems geführt wird, welches vorzugsweise entlang des Mantels zumindest eine Temperieroberfläche zum Wärmetausch mit dem Luftstrom aufweist. Diese Temperieroberfläche kann beispielsweise Strömungskanäle oder Kühlrippen aufweisen, um den Wärmetausch zu verbessern. Entsprechendes gilt auch, wenn vorgesehen ist, dass das Schottblatt den Luftstrom um die Antriebseinrichtung herumführt. Dazu kann vorgesehen sein, dass die Leitblätter eine form aufweisen, die den Luftstrom radial nach außen bewegt. Dadurch trifft der Luftstrom weniger frontal auf das Brennstoffzellensystem oder den Verbrennungsmotor, sondern wird um diese Teile herumgeleitet. Dies verringert auch den Strömungswiderstand.

Besonders vorteilhaft ist, wenn in dem ersten Betriebszustand die Kühlerabschottung Strömungen quer zur Hauptströmungsrichtung des Luftstroms stromabwärts der Kühlerabschottung und des Rotors vermindert. Dies wird durch die entgegengesetzte Anstellung erreicht.

In der Folge wird die Erfindung anhand nicht einschränkender, erfindungsgemäßer Ausführungsformen in den Figuren erläutert. Es zeigen:
- Fig. 1: einen Belüftungskanal eines erfindungsgemäßen Fahrzeugs mit einem erfindungsgemäßen Gebläse in einer Ausführungsform in einem Längsschnitt entlang der Hauptströmungsrichtung;
- Fig. 2a: eine Draufsicht der Kühlerabschottung aus Fig. 1 in einer geschlossenen Stellung in einem zweiten Betriebszustand;
- Fig. 2b: die Kühlerabschottung aus Fig. 1 und Fig. 2a in einer offenen Stellung in einem ersten Betriebszustand;
- Fig. 3: schematisch die Stellungen der Rotorblätter und Schottblätter der Ausführungsform der vorherigen Figuren zueinander in verschiedenen Betriebszuständen.

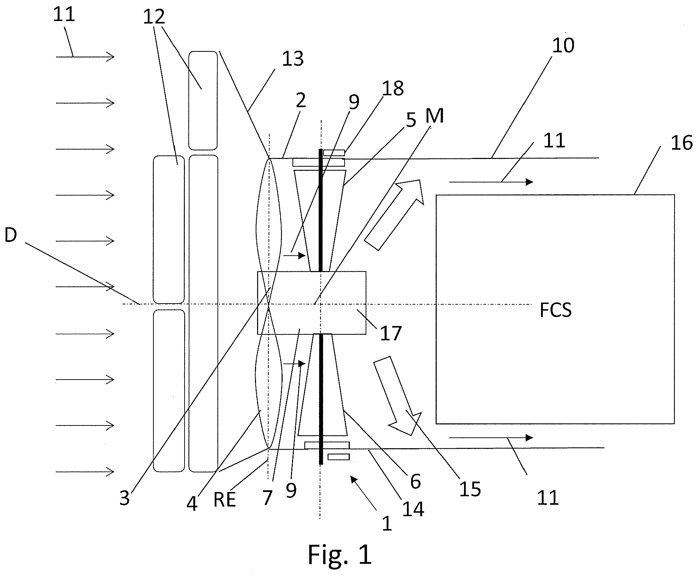

In Fig. 1 ist schematisch ein Belüftungskanal 10 eines erfindungsgemäßen Kühler-Lüfter-Systems gezeigt, welcher über einen nicht dargestellten Einlass am Gitterrost des Fahrzeugs Umgebungsluft aufnimmt, die einen Luftstrom 11 bilden. Dieser Luftstrom 11 wird durch mehrere Wärmetauscher 12 geführt, die Teil eines Kühlsystems des Antriebsstranges, vorzugsweise insbesondere eines Brennstoffzellensystems ist. Alternativ kann vorgesehen sein, dass die Wärmetauscher 12 Teil einer Wärmepumpe sind, wobei vorzugsweise zumindest ein Wärmetauscher Teil einer weiteren Kühleinrichtung ist, die einen Motor der Antriebseinrichtung kühlt. Das Gehäuse des Motors dient gleichzeitig als Nabe 17 für eine Kühlerabschottung 5. Dadurch kann der Luftstrom 11 geheizt oder gekühlt werden und vorzugsweise auch den Motor kühlen. Stromabwärts der Wärmetauscher 12 weist der Führungskanal 10 einen Zuführkanal 13 auf, welcher einen sich verengenden Querschnitt aufweist. Der Zuführkanal 13 führt zu einem Gebläse 1, welches einen im Wesentlichen runden Führungskanal 2 von vorzugsweise im Wesentlichen gleichbleibenden Querschnitt aufweist. In dem Führungskanal 2 ist ein Rotor 3 mit mehreren Rotorblättern 4 und direkt stromabwärts vom Rotor 3 die Kühlerabschottung 5 mit Schottblättern 6 angeordnet. Der Rotor 3 wird durch einen zentrisch in dessen Drehachse D angeordneten Elektromotor 7 angetrieben und transportiert den Luftstrom entlang der Hauptströmungsrichtung 9 im Führungskanal 10.

Stromabwärts der Kühlerabschottung 5 ist ein Abführkanal 14 des Gebläses angeordnet, welcher den Luftstrom 11 vom Gebläse abführt und Teil des Führungskanals 2 und des Belüftungskanals 10 ist. Die Schottblätter 6 der Kühlerabschottung 5 lenken dabei den Luftstrom von einer Mittelachse M der Kühlerabschottung 5 nach außen, also in Richtung des Mantels des Belüftungskanals 10 (Pfeile 15). Dadurch wird der Luftstrom 11 um ein Brennstoffzellensystem 16 herumgeführt, welches stromabwärts des Gebläses im Belüftungskanal 10 angeordnet ist. Dies verringert den Luftwiderstand, der durch das Brennstoffzellensystem 16 dem Luftstrom 11 entgegenwirkt.

Stromabwärts des Brennstoffzellensystems 16 wird der Luftstrom über einen nicht dargestellten Auslass wieder an die Umgebung abgeführt.

Die Kühlerabschottung 5 ist wenige Zentimeter vom Rotor 3 beabstandet. Es weist vorzugsweise 16 Schottblätter 6 auf, welche gleichmäßig um Mittelachse M radial angeordnet sind und sich von der Nabe 17 bis zum Mantel des Führungskanals 2 erstrecken. Es ist der gesamte Luftstrom 11 durch die Kühlerabschottung 5 geführt. Die Schottblätter 6 sind als Leitschaufeln ausgeführt und weisen eine längliche Form mit gebogenem Profil auf.

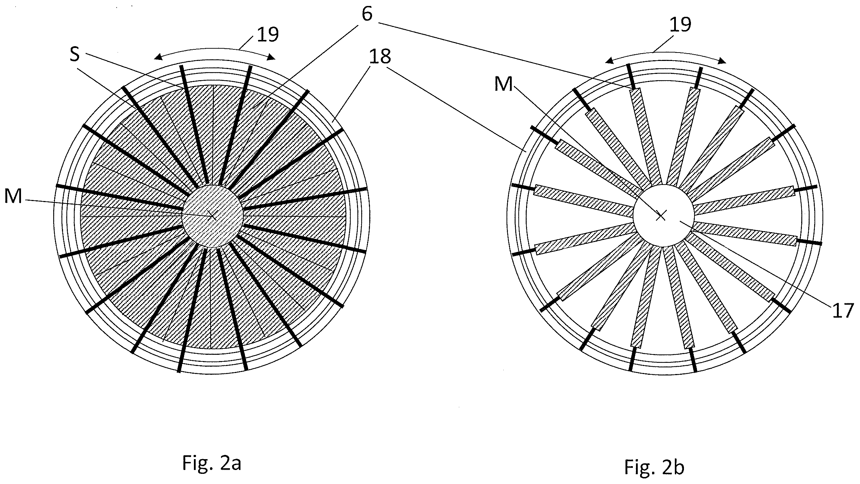

Wie aus Figs. 2a und 2b ersichtlich, sind die Schottblätter 6 um Schwenkachsen S verschwenkbar. Die Schwenkachsen S sind dabei im Wesentlichen parallel zur Haupterstreckungsrichtung der Schottblätter 6 und stehen normal zur Mittelachse M.

Die Schottblätter 6 sind allesamt gemeinsam über ein Einstellelement 18 um deren jeweilige Schwenkachse S verschwenkbar. Das Einstellelement 18 ist als Einstellring ausgeführt und erstreckt sich um den gesamten Umfang der Kühlerabschottung 5. Durch Drehung oder Schwenkung des Einstellelements 18 um die Mittelachse M können alle Schottblätter 6 verschwenkt werden. Das Einstellelement 18 ist entlang der Mittelachse M zu den Schwenkachsen S beabstandet.

Vorzugsweise jedes Schottblatt 6 weist an seinem radial äußeren Ende ein Eingreifteil mit Zähnen auf, welches in Zähne des Einstellelements 18 eingreift und an Wellen entlang der Schwenkachsen S der Schottblätter 6 angeordnet sind. Dreht sich das Einstellelement 18 (angezeigt durch Pfeile 19), so bewegen sich die ineinandergreifenden Zähne derart, dass die Schottblätter 6 um ihre Schwenkachsen S verschwenkt werden. Im einfachsten Fall kann das Eingreifteil dazu ein Zahnrad oder ein Zahnradteilsegment sein, wobei die Zähne entlang eines Kreises oder eines Kreissegments, oder auch entlang einer anderen Kurve angeordnet sein können.

Fig. 2a offenbart eine geschlossene Stellung der Kühlerabschottung 5, bei dem die Schottblätter 6 so weit verschwenkt sind, dass sie einander berühren und damit den Führungskanal 2 im Wesentlichen verschließen. Damit wird die Verbindung zwischen Rotor 3 und Abführkanal 14 unterbrochen und verschlossen. Eine solche Stellung ist sinnvoll, wenn der Rotor 3 ausgeschalten ist, also in einem zweiten Betriebszustand. Somit kann kein wesentliches Luftvolumen mehr durch den Führungskanal 2 hindurch, womit keine Luft mehr über den Einlass eindringt und die Luft über die Außenkontur des Fahrzeugs um das Fahrzeug herumgeleitet wird.

Fig. 2b offenbart eine weitere, offene Stellung der Kühlerabschottung 5. Die Schottblätter 6 sind dabei in Bezug zur geschlossenen Stellung um etwa 70° verschwenkt berühren einander nicht mehr großflächig. So kann ein großes Luftvolumen durch die Kühlerabschottung 5 strömen, trotzdem verhindert oder vermindert die Kühlerabschottung 5 aber durch seine Schottblätter 6 das Auftreten von rotierenden Strömungen um die Hauptströmungsrichtung. So eine Stellung ist in einem ersten Betriebszustand sinnvoll, wenn der Rotor 3 angetrieben wird.

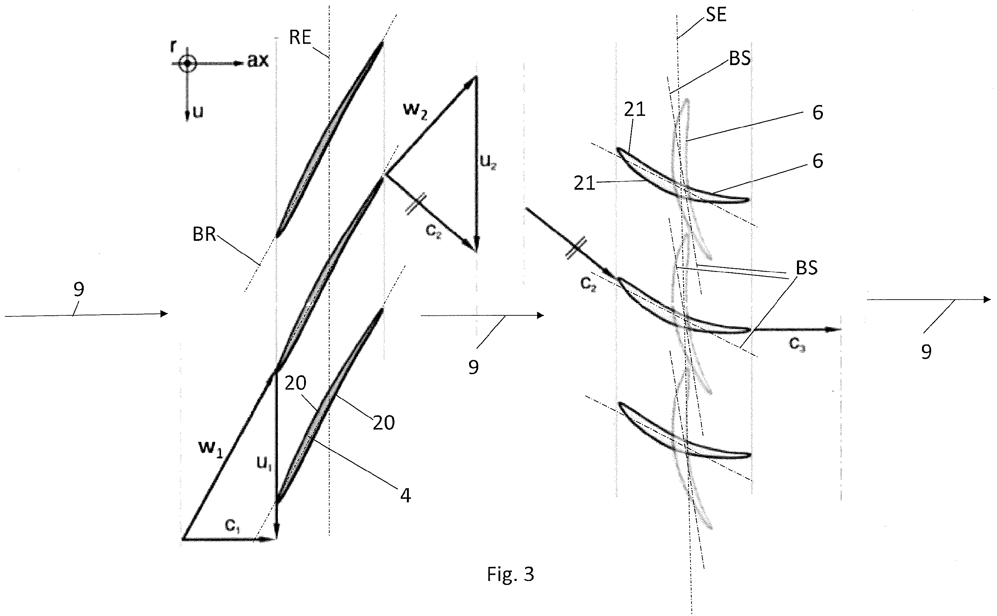

In Fig. 3 werden die Stellungen der Rotorblätter 4 in Schnitten quer zu deren Haupterstreckungsachsen, welche normal zur Drehachse D stehen, gegenüber den Stellungen der Schottblätter 6 in Schnitten quer zu deren Schwenkachsen S dargestellt. Zur besseren Ansicht sind die Schnitte der Blätter nebeneinander dargestellt. Die Rotorblätter 4 weisen Breitenachsen BR auf, entlang derer sie sich in der Breite erstrecken. Auf beiden Seiten weisen die Rotorblätter 4 Strömungsflächen 20 auf, entlang derer die Luft strömt. Die Strömungsflächen 20 erstrecken sich im Wesentlichen entlang dieser Breitenachsen BR und drücken bei der Rotation die Luft in die Hauptströmungsrichtung 9. Dies ist dadurch bedingt, das Rotorblätter 4 im Bezug zur Rotorebene RE, welche normal zur Drehachse D steht, gepitcht, also angestellt sind. Mit anderen Worten sind die Breitenachsen BR und/oder die Strömungsflächen 20 nicht parallel mit der Rotorebene RE und fallen auch nicht in diese hinein.

Das Geschwindigkeitsdreieck stromaufwärts der Rotorblätter 4 gibt die Umfangsgeschwindigkeit u₁ (entspricht auch der Umfangsgeschwindigkeit u₂) des Rotors 3, die Relativgeschwindigkeit w₁ und die Eintrittsgeschwindigkeit c₁ des Luftstromes an. Stromabwärts des Rotors 3 wird durch die Bewegung des Rotors 3 eine höhere erste Austrittsgeschwindigkeit c₂ und geringere Relativgeschwindigkeit w₂ erreicht. Jedoch werden auch Drallbewegungen eingebracht, wie an der inwärts gerichteten Richtung von c₂ im Vergleich zur Richtung von c₁ parallel zur Hauptströmungsrichtung 9 erkennbar ist. Dennoch ändert sich die Hauptströmungsrichtung 9 stromabwärts des Rotors 3 nicht, da der Luftstrom im Führungskanal 2 geführt ist, in diese Richtung gedrückt wird und sich nur in diese Richtung fortbewegen kann.

Die Schottblätter 6 sind einerseits in einer geschlossenen Stellung dargestellt, in der deren Breitenachsen BS aneinander angeglichen werden und so die Schottblätter 6 einander an den Rändern berühren und den Durchgang für Luft durch die Kühlerabschottung 5 im Wesentlichen verhindern. So kann kein Luftstrom durch die Kühlerabschottung 5 und der Führungskanal 2 wird im Wesentlichen verschlossen.

Darüber dargestellt ist auch eine offene Stellung der Schottblätter 6, in welcher diese eine Anstellung zur Schottebene SE aufweisen und die Anstellung entgegengesetzt zu jener der Rotorblätter 4 ist. Die im Schnitt gebeugten Strömungsflächen 21, welche sich entlang der Breitenachsen BS erstrecken, leiten die Luft in die entgegengesetzte Richtung, als die Strömungsflächen 20 der Rotorblätter 4. Eine solche Stellung ist in dem ersten Betriebszustand sinnvoll. Wenn die drallbehafteten Strömungen auf die so angestellten Schottblätter 6 treffen, so werden diese Drallströmungen linearisiert die zweite Austrittgeschwindigkeit c₃ stromabwärts der Schottblätter 6 parallel zur Hauptströmungsrichtung 9 gerichtet.

## Patentansprüche

1. Kühler-Lüfter-System zum Kühlen und/oder Heizen einer Antriebseinrichtung, insbesondere eines Brennstoffzellensystems (16), zur Anordnung in einem Fahrzeug, wobei das Kühler-Lüfter-System zumindest ein Gebläse (1) mit zumindest einem, um eine Drehachse (D) drehbaren, angetriebenen Rotor (3) zur Bewegung eines Luftstroms in eine Hauptströmungsrichtung (9), mit zumindest einem, zu einer Rotorebene (RE) normal zur Drehachse (D) angestellten Rotorblatt (4) aufweist, und wobei das Gebläse (1) stromaufwärts und/oder stromabwärts des Rotors (3) entlang der Hauptströmungsrichtung (9) zumindest eine Kühlerabschottung (5) zum Verschließen des Kühler-Lüfter-Systems aufweist, welche radial um eine Mittelachse (M) angeordnete Schottblätter (6) aufweist, die um eine Schwenkachse (S) normal zur Mittelachse (M) verschwenkbar sind, wobei die Schottblätter (6) in einer geöffneten Stellung in Bezug zu einer Schottebene (SE) normal zur Mittelachse (M) angestellt sind und dass sie gegenüber den Rotorblättern (5) entgegengesetzt angestellt sind, **dadurch gekennzeichnet, dass** zumindest ein Teil der Luft des Luftstromes (11) durch die Kühlerabschottung (5) von der Mittelachse (M) radial wegleitbar ist.

2. Kühler-Lüfter-System nach Anspruch 1, **dadurch gekennzeichnet, dass** die Kühlerabschottung (5) ein Einstellelement (18) aufweist, welches mit zumindest einem Teil der einstellbaren Schottblätter (6), vorzugsweise mit allen Schottblättern (6) verbunden ist und die Stellung dieser Schottblätter (6) gemeinsam einstellt.

3. Kühler-Lüfter-System nach Anspruch 2, **dadurch gekennzeichnet, dass** das Einstellelement (18), vorzugsweise parallel zur Mittelachse (M) stehende, Zähne aufweist und die mit ihm verbundenen Schottblätter (6) Eingreifteile aufweist, wobei Zähne des Eingreifteils in die Zähne des Einstellelements (18) eingreifen.

4. Kühler-Lüfter-System nach Anspruch 2 oder 3, **dadurch gekennzeichnet, dass** ein Stift an dem Einstellelement (18) oder den Schottblättern (6) angeordnet ist und eine Führungsöffnung an dem jeweils anderem Element, also Einstellelement (18) oder den Schottblättern (6), angeordnet ist, dass der Stift in die Führungsöffnung hineinragt und dass der Stift zumindest teilweise außerhalb der Schwenkachse des Schottblattes (6) liegt

5. Kühler-Lüfter-System nach einem der Ansprüche 1 bis 4, **dadurch gekennzeichnet, dass** zumindest der Großteil der Luft durch die Kühlerabschottung (5) von der Mittelachse (M) radial wegleitbar ist.

6. Kühler-Lüfter-System nach einem der Ansprüche 1 bis 5, **dadurch gekennzeichnet, dass** die Schottblätter (6) in einer geschlossenen Stellung die Verbindung zwischen dem Rotor (3) und zumindest einem Zuführkanal (13) zum Zuführen des Luftstromes (11) zum Rotor (3) und/oder die Verbindung zwischen dem Rotor (3) und zumindest einem Abführkanal (14) zum Abführen des Luftstromes (11) vom Rotor (3) im Wesentlichen verschließen.

7. Kühler-Lüfter-System nach einem der Ansprüche 1 bis 6, **dadurch gekennzeichnet, dass** das Gebläse (1) zumindest einen Führungskanal (2) zur Führung des Luftstromes (11) aufweist, dass in dem Führungskanal (2) der Rotor (3) und die Kühlerabschottung (5) angeordnet sind und dass sich der Rotor (3) und/oder die Kühlerabschottung (5) im Wesentlichen über den gesamten Querschnitt des Führungskanals (2) erstrecken.

8. Kraftfahrzeug, welches zumindest eine Antriebseinrichtung zur Fortbewegung des Kraftfahrzeugs aufweist, vorzugsweise eine zumindest ein Brennstoffzellensystem (16) umfassende Antriebseinrichtung, **dadurch gekennzeichnet, dass** das Kraftfahrzeug ein Kühler-Lüfter-System zur Kühlung der Antriebseinrichtung nach einem der vorigen Ansprüche aufweist.

9. Kraftfahrzeug nach Anspruch 8, **dadurch gekennzeichnet, dass** zumindest ein Brennstoffzellensystem (16) oder eine Brennkraftmaschine der Antriebseinrichtung stromabwärts des Gebläses (1) zumindest teilweise im Luftstrom (11) angeordnet ist und dass der Luftstrom (11) im Bereich des Brennstoffzellensystems (16) vorzugsweise um das Brennstoffzellensystem (16) herumgeführt ist.

10. Kraftfahrzeug nach Anspruch 8 oder 9, **dadurch gekennzeichnet, dass** das Kühler-Lüfter-System zumindest einen Einlass zur Aufnahme von Umgebungsluft aufweist, und dass der Einlass in Hauptfahrrichtung des Kraftfahrzeugs angeordnet ist.

11. Verfahren zur Temperierung einer Antriebseinrichtung, vorzugsweise eines Brennstoffzellensystems (16) der Antriebseinrichtung, vorzugsweise in einem Fahrzeug, wobei ein Luftstrom (11) in einem Kühler-Lüfter-System geführt wird und die Antriebseinrichtung durch den Luftstrom (11) temperiert wird, wobei der Luftstrom (11) von zumindest einem Rotor (3) des Gebläses (1) entlang einer Hauptströmungsrichtung (9) bewegt wird, indem zumindest ein Rotorblatt (4) des Rotors (3), welches in einer Rotorebene (RE) quer zu einer Drehachse (D) des Rotors (3) angestellt ist, Luft in die Hauptströmungsrichtung (9) drückt, wobei in einem ersten Betriebszustand der Rotor (3) angetrieben wird und Schottblätter (6) einer Kühlerabschottung (5), welche radial um eine Mittelachse (M) angeordnet sind, in Bezug zu der Schottebene (SE) normal zur Mittelachse (M) angestellt werden, und in einem zweiten Betriebszustand der Rotor (3) nicht angetrieben wird und die Schottblätter (6) einen Führungskanal (2) des Kühler-Lüfter-Systems, in dem der Luftstrom (11) geführt wird, verschließen, wobei in dem ersten Betriebszustand der Luftstrom (11) durch die Schottblätter (6), die gegenüber den Rotorblättern (4) entgegengesetzt angestellt sind, abgelenkt wird, **dadurch gekennzeichnet, dass** die Kühlerabschottung (5) den Luftstrom (11) von der Mittelachse (M) wegleitet.

12. Verfahren nach Anspruch 11, **dadurch gekennzeichnet, dass** mehrere Schottblätter (6) über ein gemeinsames Einstellelement (18) gemeinsam verschwenkt werden.

13. Verfahren nach einem der Ansprüche 11 oder 12, **dadurch gekennzeichnet, dass** in dem ersten Betriebszustand die Kühlerabschottung (6) Strömungen quer zur Hauptströmungsrichtung (9) des Luftstroms (11) stromabwärts der Kühlerabschottung (5) und des Rotors (3) vermindert.

14. Verfahren nach einem der Ansprüche 11 bis 13, **dadurch gekennzeichnet, dass** die Schottblätter (6), den Luftstrom (11) von der Mittelachse (M) wegleiten.

15. Verfahren nach einem der Ansprüche 11 bis 14, **dadurch gekennzeichnet, dass** die Kühlerabschottung (5), vorzugsweise die Schottblätter (6), den Luftstrom (11) um die Antriebseinrichtung herumführt.

## Claims

1. Radiator fan system for cooling and/or heating a drive device, in particular a fuel cell system (16), for arrangement in a vehicle, wherein the radiator fan system has at least one fan (1) having at least one driven rotor (3) rotatable about an axis of rotation (D) for moving an air flow in a main flow direction (9), having at least one rotor blade (4) arranged at an angle to a rotor plane (RE) normal to the axis of rotation (D), and wherein the fan (1) has at least one radiator shutter (5) for closing off the radiator fan system upstream and/or downstream of the rotor (3) along the main flow direction (9), which radiator shutter has shutter blades (6) arranged radially about a central axis (M) and pivotable about a pivot axis (S) normal to the central axis (M), wherein the shutter blades (6) in an open position are positioned normal to the central axis (M) with respect to a shutter plane (SE) and are positioned in opposition to the rotor blades (5), **characterized in that** at least part of the air of the air flow (11) can be guided radially away from the central axis (M) through the radiator shutter (5).

2. Radiator fan system according to claim 1, **characterized in that** the radiator shutter (5) has an adjusting element (18) which is connected to at least some of the adjustable shutter blades (6), preferably to all shutter blades (6), and which jointly adjusts the position of these shutter blades (6).

3. Radiator fan system according to claim 2, **characterized in that** the adjusting element (18) has teeth, preferably positioned parallel to the central axis (M), and the shutter blades (6) connected to it have engagement parts, wherein the teeth of the engagement part engage in the teeth of the adjusting element (18).

4. Radiator fan system according to claim 2 or 3, **characterized in that** a pin is arranged on the adjusting element (18) or the shutter blades (6) and a guide opening is arranged on the respective other element, i.e. the adjusting element (18) or the shutter blades (6), **in that** the pin projects into the guide opening and **in that** the pin lies at least partially outside the pivot axis of the shutter blade (6).

5. Radiator fan system according to one of claims 1 to 4, **characterized in that** at least the majority of the air can be radially diverted away from the central axis (M) by the radiator shutter (5).

6. Radiator fan system according to one of claims 1 to 5, **characterized in that** the shutter blades (6) in a closed position substantially close the connection between the rotor (3) and at least one supply channel (13) for supplying the air flow (11) to the rotor (3) and/or the connection between the rotor (3) and at least one discharge channel (14) for discharging the air flow (11) from the rotor (3).

7. Radiator fan system according to one of claims 1 to 6, **characterized in that** the fan (1) has at least one guide channel (2) for guiding the air flow (11), **in that** the rotor (3) and the radiator shutter (5) are arranged in the guide channel (2) and **in that** the rotor (3) and/or the radiator shutter (5) extend substantially over the entire cross-section of the guide channel (2).

8. Motor vehicle comprising at least one drive device for propelling the motor vehicle, preferably a drive device comprising at least one fuel cell system (16), **characterized in that** the motor vehicle comprises a radiator fan system for cooling the drive device according to one of the preceding claims.

9. Motor vehicle according to claim 8, **characterized in that** at least one fuel cell system (16) or an internal combustion engine of the drive device is arranged downstream of the fan (1) at least partially in the air flow (11) and **in that** the air flow (11) is preferably guided around the fuel cell system (16) in the region of the fuel cell system (16).

10. Motor vehicle according to claim 8 or 9, **characterized in that** the radiator fan system has at least one inlet for taking in ambient air, and **in that** the inlet is arranged in the main direction of travel of the motor vehicle.

11. Method for the temperature control of a drive device, preferably a fuel cell system (16) of the drive device, preferably in a vehicle, wherein an air flow (11) is guided in a radiator fan system and the drive device is temperature-controlled by the air flow (11), wherein the air flow (11) is moved by at least one rotor (3) of the fan (1) along a main flow direction (9) in that at least one rotor blade (4) of the rotor (3), which is positioned in a rotor plane (RE) transversely to an axis of rotation (D) of the rotor (3), presses air into the main flow direction (9), wherein in a first operating state the rotor (3) is driven and shutter blades (6) of a radiator shutter (5), which are arranged radially about a central axis (M), are positioned relative to the shutter plane (SE) normal to the central axis (M), and in a second operating state the rotor (3) is not driven and the shutter blades (6) close off a guide channel (2) of the radiator fan system in which the air flow (11) is guided, wherein in the first operating state the air flow (11) is deflected by the shutter blades (6), which are positioned in opposition to the rotor blades (4), **characterized in that** the radiator shutter (5) diverts the air flow (11) away from the central axis (M).

12. Method according to claim 11, **characterized in that** a plurality of shutter blades (6) are pivoted together via a common adjusting element (18).

13. Method according to one of claims 11 or 12, **characterized in that,** in the first operating state, the radiator shutter (6) reduces flows transverse to the main flow direction (9) of the air flow (11) downstream of the radiator shutter (5) and the rotor (3).

14. Method according to one of claims 11 to 13, **characterized in that** the shutter blades (6) divert the air flow (11) away from the central axis (M).

15. Method according to one of claims 11 to 14, **characterized in that** the radiator shutter (5), preferably the shutter blades (6), guides the air flow (11) around the drive device.

## Revendications

1. Système radiateur-ventilateur pour refroidir et/ou chauffer un dispositif d'entraînement, en particulier un système (16) de pile à combustible, à monter dans un véhicule, dans lequel le système radiateur-ventilateur a au moins une soufflante (1) ayant au moins un rotor (3), entraînée en rotation autour d'un axe (1) de rotation, pour le déplacement d'un courant d'air dans une direction (9) d'écoulement principal, ayant au moins une pale (4) de rotor montée par rapport à l'axe (D) de rotation normalement par rapport à un plan (RE) de rotor et dans lequel la soufflante (1) a en amont et/ou en aval du rotor (3) suivant la direction (9) d'écoulement principal au moins un cloisonnement (5) de radiateur pour la fermeture du système radiateur-ventilateur, qui a des pales (6) de cloisonnement montées radialement autour de l'axe (M) médian, qui peuvent pivoter normalement à l'axe (M) médian autour d'un axe (S) de pivotement, dans lequel les pales (6) de cloisonnement sont montées dans une position ouverte par rapport à un plan (SE) de cloisonnement normalement à l'axe (M) médian et en ce qu'elles sont montées en sens opposés par rapport aux pales (5) de rotor, **caractérisé en ce qu'**au moins une partie de l'air du courant (11) d'air peut être évacué radialement de l'axe (M) médian par le cloisonnement (5) de radiateur.

2. Système radiateur-ventilateur suivant la revendication 1, **caractérisé en ce que** le cloisonnement (5) de radiateur a un élément (18) de réglage, qui est relié à au moins une partie des pales (6) de cloisonnement réglable, de préférence à toutes les pales (6) de cloisonnement, et qui règle conjointement la position de ces pales (6) de cloisonnement.

3. Système radiateur-ventilateur suivant la revendication 2, **caractérisé en ce que** l'élément (18) de réglage a des dents, s'étendant de préférence parallèlement à l'axe (M) médian, et les pales (6) de cloisonnement qui sont reliées, ont les parties de pénétration, dans lequel des dents de la partie de la pénétration pénètrent dans les dents de l'élément (18) de réglage.

4. Système radiateur-ventilateur suivant la revendication 2 ou 3, **caractérisé en ce qu'**une broche est montée sur l'élément (18) de réglage ou sur les pales (6) de cloisonnement et une ouverture de guidage est disposée sur l'autre élément respectif, donc élément (18) de réglage aux pales (6) de cloisonnement, **en ce que** la broche pénètre dans l'ouverture de guidage et **en ce que** la broche est au moins par endroit à l'extérieur de l'axe de pivotement de la pale (6) de cloisonnement.

5. Système radiateur-ventilateur suivant l'une des revendications 1 à 4, **caractérisé en ce qu'**au moins la plus grande partie de l'air peut être évacuée radialement de l'axe (M) médian par le cloisonnement (5) de radiateur.

6. Système radiateur-ventilateur suivant l'une des revendications 1 à 5, **caractérisé en ce que** les pales (6) de cloisonnement ferment dans une position fermée la communication entre le rotor (3) et au moins un conduit (13) d'apport pour l'apport du courant (11) d'air au rotor (3) et/ou la communication entre le rotor (3) et au moins un conduit (14) d'évacuation pour l'évacuation du courant (11) d'air du rotor (3).

7. Système radiateur-ventilateur suivant l'une des revendications 1 à 6, **caractérisé en ce que** la soufflante (1) a au moins un conduit (2) de conduite du courant (11) d'air **en ce que** dans le conduit (2) de conduite sont montés le rotor (3) et le cloisonnement (5) de radiateur et **en ce que** le rotor (3) et/ou le cloisonnement (5) de radiateur s'étendent sensiblement sur toute la section transversale du conduit (2) de conduite.

8. Véhicule automobile qui a au moins un dispositif d'entraînement pour la propulsion du véhicule automobile, de préférence un dispositif d'entraînement comprenant au moins un système (16) de pile à combustible, **caractérisé en ce que** le véhicule a un système radiateur-ventilateur de refroidissement du dispositif d'entraînement suivant l'une des revendications précédentes.

9. Véhicule automobile suivant la revendication 8, **caractérisé en ce qu'**au moins un système (16) de pile à combustible ou un moteur à combustion interne du dispositif d'entraînement est monté en aval de la soufflante (1) au moins en partie dans le courant (11) d'air et **en ce que** le courant (11) d'air passe de préférence autour du système (16) de pile à combustible dans la partie du système (16) de pile à combustible.

10. Véhicule automobile suivant la revendication 8 ou 9, **caractérisé en ce que** le système radiateur-ventilateur a au moins une entrée de réception d'air ambiant et **en ce que** l'entrée est disposée dans la direction de déplacement principale du véhicule automobile.

11. Procédé de mise en température d'un dispositif d'entraînement, de préférence d'un système (16) de pile à combustible du dispositif d'entraînement de préférence dans un véhicule, dans lequel on fait passer un courant (11) d'air dans un système radiateur-ventilateur et on met en température le dispositif d'entraînement par le courant (11) d'air, dans lequel on déplace le courant (11) d'air d'au moins un rotor (3) de la soufflante (1) suivant une direction (9) d'écoulement principal par le fait qu'au moins une pale (4) de rotor (3), qui est montée dans un plan (RE) de rotor transversalement à un axe (D) de rotation du rotor (3), comprime de l'air dans la direction (9) d'écoulement principal, dans lequel dans un premier état de fonctionnement on entraîne le rotor (3) et on met les pales (6) d'un cloisonnement (5) de radiateur, qui sont disposées radialement autour de l'axe (M) médian, par rapport au plan (SE) de cloisonnement normalement à l'axe (M) médian et dans un deuxième état de fonctionnement on n'entraîne pas le rotor (3) et les pales (6) cloisonnement ferment un conduit (2) de conduite du système radiateur-ventilateur, dans lequel passe le courant (11) d'air, dans lequel dans le premier état de fonctionnement le courant (11) d'air est dévié par les pales (6) de cloisonnement, qui sont montées de manière opposée aux pales (4) du rotor, **caractérisé en ce que** le cloisonnement (5) de radiateur évacue le courant (11) d'air de l'axe (M) médian.

12. Procédé suivant la revendication 11, **caractérisé en ce que** l'on fait pivoter conjointement plusieurs pales (6) de cloisonnement par un élément (18) de réglage commun.

13. Procédé suivant l'une des revendications 11 ou 12, **caractérisé en ce que** dans le premier état de fonctionnement, le cloisonnement (6) de radiateur diminue, en aval du cloisonnement (5) de radiateur et du rotor (3), des écoulements transversaux à la direction (9) principale d'écoulement du courant (11) d'air.

14. Procédé suivant l'une des revendications 11 à 13, **caractérisé en ce que** les pales (6) de cloisonnement évacuent le courant (11) d'air de l'axe (M) médian.

15. Procédé suivant l'une des revendications 11 à 14, **caractérisé en ce que** le cloisonnement (5) de radiateur, de préférence les pales (6) de cloisonnement, fait passer le courant (11) d'air autour du dispositif d'entraînement.
